# EUROPÄISCHE PATENTANMELDUNG

(11) **EP 0 831 009 A2**
(43) Veröffentlichungstag der Anmeldung: **25.03.1998**
(21) Anmeldenummer: 97115680.7
(22) Anmeldetag: 10.09.1997
(51) Int. Cl.: B62D 1/16, B62D 65/00

(54) **Kraftfahrzeuglenksäulen-Baueinheit**

(30) Priorität: 19.09.1996 DE 19638316
(71) Anmelder: Lemförder Metallwaren AG, 49448 Lemförde (DE)
(72) Erfinder: Baumann, Janet, 49356 Dipeholz (DE); Schäfer, Burkhard, 27777 Ganderkesee (DE)

(57) **Zusammenfassung**

Es wird eine selbst positionierende, schnell montierbare Kraftfahrzeuglenksäulenbaueinheit vorgestellt, die eine Lenksäule, einen Lenksäulenanschlußrahmen (1), eine fahrzeugseitig festgelegte Anschlußkonsole und mindestens eine Befestigungsvorrichtung (3) zur Festlegung des Lenksäulenanschlußrahmens (1) an der Anschlußkonsole aufweist, wobei die Befestigungsvorrichtung (3) mindestens zwei miteinander verschraubbare Befestigungselemente (4,7) besitzt, zwischen denen eine verformbare Distanzhülse (8) angeordnet ist, wobei in der Anschlußkonsole mindestens ein Durchbruch ausgespart ist, der aus zwei unterschiedlich großen Teilbereichen besteht.

## Beschreibung

Die Erfindung betrifft eine Kraftfahrzeuglenksäulenbaueinheit, die eine Lenksäule, einen Lerksäulenanschlußrahmen, eine fahrzeugseitig festgelegte Anschlußkonsole und mindestens eine Befestigungsvorrichtung zur Festlegung des Lenksäulenanschlußrahmens an der Anschlußkonsole aufweist, wobei die Befestigungsvorrichtung mindestens zwei miteinander verschraubbare Befestigungselemente besitzt.

Derartige gattungsgemäße Lenksäulenbaueinheiten werden sowohl bei Personenkraftwagen als auch bei Lastkraftwagen eingesetzt. Bei der Herstellung der Fahrzeuge erfolgt die Montage der Lenksäule in üblicher Weise dergestalt, daß der Lenksäulenanschlußrahmen an der fahrzeugseitigen Anschlußkonsole, die aus einem Querträger, einem Rahmenprofil oder einem ähnlichen Bauteil bestehen kann, mit Hilfe von Schrauben, Muttern, Unterlegscheiben und ähnlichen artverwandten Bauteilen befestigt wird. Die Montage ist hierbei in einzelne Ablaufschritte aufgegliedert. Zunächst wird die Lenksäule im Fahrzeug vorpositioniert, danach erfolgt ein Vormontieren der o.e. Schrauben und Muttern, an welches sich schließlich nach der Endausrichtung der Lenksäule das endgültige Festziehen der Schraubverbindung mit Hilfe geeigneter Werkzeugunterstützung anschließt, wobei vordefinierte Anzugsmomente zu beachten sind.

Eine derartige Lenksäulenmontage ist bedingt durch die verschiedenen aufeinanderfolgenden Arbeitsschritte zeitaufwendig und somit kostenintensiv. Darüber hinaus besteht der Nachteil, daß die Lenksäulenbaueinheit bei Anlieferung für die Endmontage aus einzelnen Baugruppen wie beispielsweise Lenksäule und den einzelnen Schraubverbindungen besteht, was den Lager- und Logistikaufwand erhöht.

Aus dem DE-GM 74 36 144 ist eine Kraftfahrzeuglenksäulenbaueinheit bekannt, die eine Lenksäule mit Lenksäulenanschlußrahmen, eine fahrzeugseitig festgelegte Anschlußkonsole und mindestens eine Befestigungsvorrichtung zur Festlegung des Lenksäulenanschlußrahmens an der Anschlußkonsole aufweist, wobei die Befestigungsvorrichtung mindestens zwei miteinander verschraubbare Befestigungselemente besitzt. Dabei ist zwischen den miteinander verschraubten Befestigungselementen eine Distanzhülse angeordnet.

Aufgabe der vorliegenden Erfindung ist es, eine Kraftfahrzeuglenksäulenbaueinheit der gattungsgemäßen Art so weiterzuentwickeln, daß der Montageaufwand für derartige Baueinheiten erheblich verringert, die Montage insgesamt vereinfacht und die Bevorratung sowie der logistische Aufwand für die Kraftfahrzeuglenksäulen herabgesetzt wird.

Die Aufgabe wird erfindungsgemäß dadurch gelöst, daß zwischen den miteinander verschraubten Befestigungselementen der Kraftfahrzeuglenksäulenbaueinheit eine verformbare Distanzhülse angeordnet ist und daß in der Anschlußkonsole Durchbrüche ausgespart sind, die aus zwei unterschiedlich großen Teilbereichen bestehen.

Der Einbau einer Distanzhülse in die Befestigungsvorrichtung ermöglicht es, die Befestigungsmittel bereits vor der Endmontage am Lenksäulenanschlußrahmen unverlierbar vorzumontieren. Die Lenksäule mit der vorbereiteten Schraubverbindung braucht vom Kunden nur noch in die korrespondierende Anschlußkonsole am Kraftfahrzeug eingehängt zu werden. Durch die spezielle Gestaltung der Durchbrüche in der Anschlußkonsole wird erreicht, daß sich bei dem Einhängen der Lenksäule diese automatisch in eine vorbestimmte richtige Stellung positioniert. Es braucht somit nur noch abschließend mit geeignetem Werkzeug das endgültige Festziehen der Schraubverbindung vorgenommen zu werden.

Durch die erfindungsgemäße Gestaltung wird folglich die Montage der Kraftfahrzeuglenksäulenbaueinheit vom Zeitaufwand her entscheidend verkürzt, sowie der logistische Aufwand verringert. Durch die Vorpositionierung der Lenksäule ist die Handhabung bei der Montage erleichtert, darüber hinaus werden Fehlmontagen ausgeschlossen.

Weitere vorteilhafte Ausgestaltungen des Gegenstandes der Erfindung ergeben sich aus den Merkmalen der Unteransprüche. Es hat sich insbesondere als vorteilhaft erwiesen, die beiden Teilbereiche der Durchbrüche der Anschlußkonsole so zu gestalten, daß ein Teilbereich einen runden Querschnitt aufweist, dessen Durchmesser größer ist als der Außendurchmesser der Befestigungselemente und daß der zweite weitere Teilbereich in Gestalt eines U-förmigen Querschnittes sich an den ersten Teilbereich anschließt, wobei die Abmessung zwischen den beiden parallelen Schenkeln des U kleiner ist als der Außendurchmesser der Befestigungselemente. Bei der Montage der Kraftfahrzeuglenksäulenbaueinheit wird eine Seite der am Lenksäulenanschlußrahmen vormontierten Befestigungselemente durch den größeren Teilbereich des Durchbruches soweit hindurchgeschoben, bis sich die zwischen den Befestigungselementen befindliche Distanzhülse im Durchbruch befindet. Danach erfolgt durch Absenken der Lenksäule das Einbringen der Distanzhülse in den U-förmigen zweiten Teilbereich des Durchbruches der Anschlußkonsole. Durch die elastischen Eigenschaften der Distanzhülse verformt sich diese entsprechend der Außenkontur dieses zweiten Teilbereiches und stellt somit die endgültige richtige Positionierung der Lenksäule sicher. Darüber hinaus können die elastischen Eigenschaften der Distanzbuchse in einem gewissen Bereich Toleranzen, die sich aus der Anordnung der Durchbrüche in der Anschlußkonsole ergeben können, ausgleichen.

Die erforderlichen elastischen Eigenschaften der Distanzhülse lassen sich auf einfache Weise dadurch realisieren, daß die Distanzhülse aus Kunststoff hergestellt ist. Darüber hinaus ist es natürlich denkbar, die Distanzhülse auch aus anderen elastischen Werkstoffen, wie beispielsweise Gummi zu fertigen.

Im folgenden wird ein Ausführungsbeispiel des Gegenstandes der Erfindung anhand der beigefügten Figuren näher erläutert. Es zeigen:
- **Figur 1**: einen Teilbereich des Lenksäulenanschlußrahmens mit einer vormontierten Befestigungsvorrichtung;
- **Figur 2**: den Ausschnitt des Lenksäulenanschlußrahmens nach der Endmontage an der kraftfahrzeugseitigen Anschlußkonsole;
- **Figur 3**: eine Ansicht der fahrzeugseitigen Anschlußkonsole mit den zum Durchstecken und Befestigen der Befestigungsvorrichtung vorgesehenen Durchbrüchen;
- **Figur 4**: eine Ansicht des Lenksäulenanschlußrahmens der Kraftfahrzeuglenksäulenbaueinheit vor Montage der Befestigungsvorrichtung.

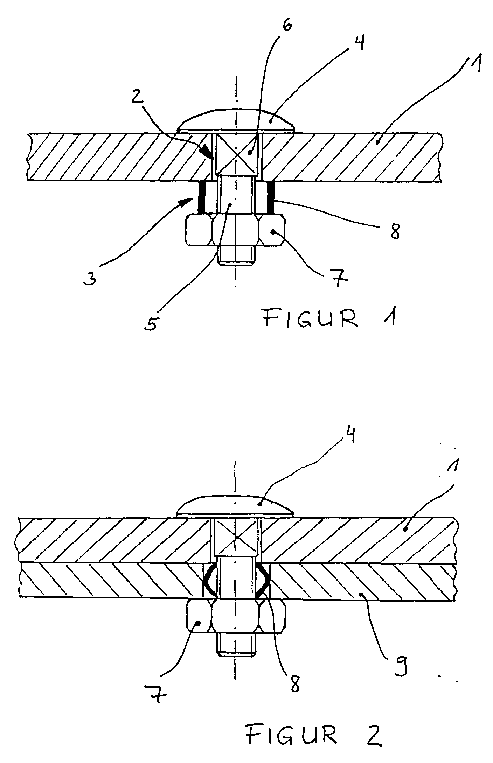

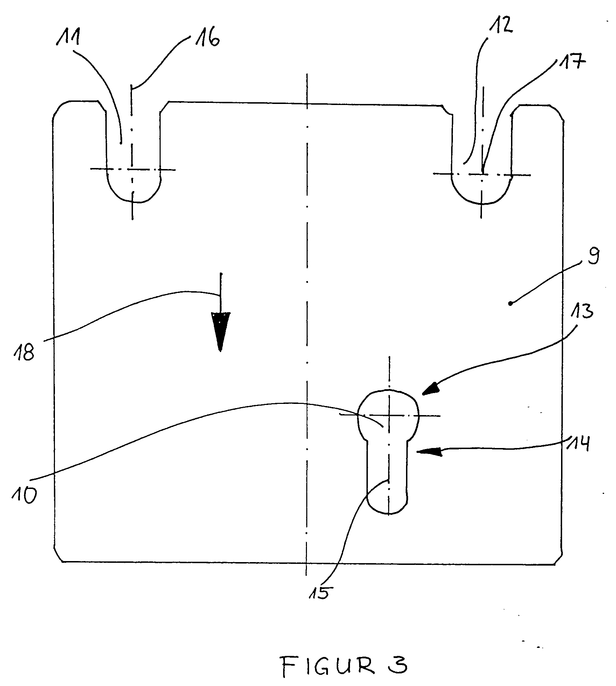

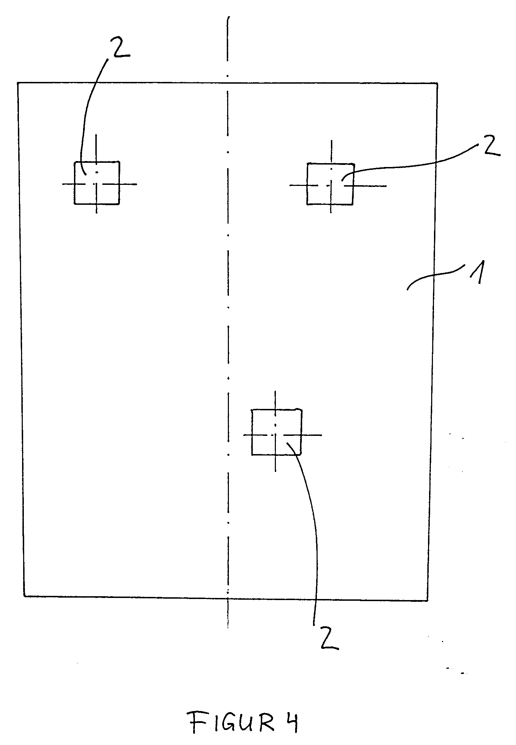

Der in **Figur 1** im Schnitt dargestellte Lenksäulenanschlußrahmen 1 der Kraftfahrzeuglenksäulenbaueinheit besteht aus einer Blechkonstruktion und weist in diesem Ausführungsbeispiel 3 quadratische Durchbrüche 2 auf. Die Anordnung der quadratischen Durchbrüche 2 ergibt sich aus der Ansicht des Lenksäulenanschlußrahmens in **Figur 4**. Die Anordnung ist so gewählt, daß sich nach Montage der Lenksäule eine verspannungsfreie Dreipunktlage ergibt.

In den Durchbruch 2 wird zur Montage der Befestigungsvorrichtung, die in ihrer Gesamtheit mit 3 gekennzeichnet ist, eine Flachrundschraube 4 eingesetzt ist, bei der sich zwischen Gewinde 5 und Schraubenkopf ein Vierkantansatz 6 befindet. Der Vierkantansatz verhindert in Verbindung mit der Form des Durchbruches 2 eine Verdrehung der Flachrundschraube 4.

Die **Figur 1** zeigt außerdem, daß die Befestigungsvorrichtung 3 zusätzlich eine Sechskantmutter 7 und eine Distanzhülse 8 aufweist. Die Distanzhülse ist zwischen der Sechskantmutter 7 und der Wandung des Lenksäulenanschlußrahmens 1 angeordnet und in ihrer Länge so bemessen, daß sie in etwa der Dicke der Wandung der Anschlußkonsole 9 entspricht, an der der Lenksäulenanschlußrahmen 1 bzw. die gesamte Lenksäule zu befestigen ist. Durch die Elastizität der Distanzhülse 8, die vorzugsweise aus Kunststoff hergestellt ist, übt diese eine leichte Druckkraft auf die Sechskantmutter 7 nach der Verschraubung mit der Flachrundschraube 4 aus. Dieser leichte Druck verhindert ein Lösen der Befestigungsvorrichtung 3 während des Transportes der Kraftfahrzeuglenksäule zu ihrem Endmontageort.

Bei der Endmontage wird der Lenksäulenanschlußrahmen 1 mit den vormontierten drei Befestigungseinrichtungen 3 mit der Frontseite der Anschlußkonsole 9 zur Anlage gebracht. In der Anschlußkonsole 9 befinden sich, wie dies die **Figur 3** zeigt, ein Durchbruch 10 sowie zwei zur Seitenwandung hin offene U-förmige Ausnehmungen 11 und 12. Der Durchbruch 10 besitzt einen Teilbereich 13 von kreisförmigem Querschnitt, dessen Durchmesser so bemessen daß er geringfügig größer ist als der Außendurchmesser der Sechskantmutter 7, die bei der Endmontage des Lenksäulenanschlußrahmens durch diese Öffnung hindurchzustecken ist.

An den Teilbereich 13 des Durchbruches 10 schließt sich ein weiterer Teilbereich 14 an, der einen U-förmigen Querschnitt besitzt. Die Mittellinie 15 dieses Teilbereiches ist parallel zu den Mittellinien 16 und 17 der Ausnehmungen 11 und 12 ausgerichtet. Die parallelen Seitenwandungen dieses Teilbereiches 14 weisen einen Abstand zueinander auf, dessen Maß kleiner ist als das Außenmaß der Sechskantmutter 7 und auch kleiner als der Außendurchmesser der Distanzhülse 8.

Nachdem der Lenksäulenanschlußrahmen 1 an die Anschlußkonsole 9 zur Anlage gebracht worden ist, erfolgt eine Absenkung der gesamten Lenksäule in Richtung des Pfeiles 18 der **Figur 3**.

Aus **Figur 2** wird deutlich, daß die Distanzhülse 8 aufgrund des engen Querschnittes des Teilbereiches 14 des Durchbruches 10 zusammengequetscht wird und die gesamte Lenksäule an ihrem vorbestimmten Platz festlegt. Haben Lenksäulenanschlußrahmen und Anschlußkonsole somit ihre endgültige Position zueinander eingenommen, so erfolgt das endgültige Festsetzen der Befestigungsvorrichtung mit einem vorbestimmten Anzugsmoment.

Durch die Verformung der Distanzhülse 8 im Durchbruch 10 und die damit verbundene Positionierung der Lenksäule entfällt ein aufwendiges Ausrichten der Baueinheit, wie dies bisher üblich war. Darüber hinaus gewährleistet die Distanzbuchse einen gewissen Toleranzausgleich, der unter Umständen dadurch notwendig ist, daß die in dem Lenksäulenanschlußrahmen 1 eingebrachten Durchbrüche und die in der Anschlußkonsole 9 vorhandenen Durchbrüche 10 bzw. Ausnehmungen 11 und 12 nicht genau fluchten. Aufwendige Nacharbeitungsmaßnahmen der Durchbrüche entfallen somit.

Die selbstständige Positionierung der Lenksäulenbaueinheit an der Anschlußkonsole 9 kann darüber hinaus den Vorteil haben, daß im Rahmen einer Einmann-/Einhand-Montage zusätzliche Arbeitskräfte entbehrlich sind.

### Bezugszeichenliste:

- 1: Lenksäulenanschlußrahmen
- 2: Durchbruch
- 3: Befestigungsvorrichtung
- 4: Flachrundschraube
- 5: Gewinde
- 6: Vierkantansatz
- 7: Sechskantmutter
- 8: Distanzhülse
- 9: Anschlußkonsole
- 10: Durchbruch
- 11: Ausnehmung
- 12: Ausnehmung
- 13: Teilbereich
- 14: Teilbereich
- 15: Mittellinie
- 16: Mittellinie
- 17: Mittellinie
- 18: Pfeil

## Patentansprüche

1. Kraftfahrzeuglenksäulenbaueinheit, die eine Lenksäule mit einem Lenksäulenanschlußrahmen, eine fahrzeugseitig festgelegte Anschlußkonsole und mindestens eine Befestigungsvorrichtung zur Festlegung des Lenksäulenanschlußrahmen an der Anschlußkonsole aufweist, wobei die Befestigungsvorrichtung mindestens zwei miteinander verschraubbare Befestigungselemente besitzt,
**dadurch gekennzeichnet, daß**
zwischen den miteinander verschraubten Befestigungselementen (4, 7) eine verformbare Distanzhülse (8) angeordnet ist und daß in der Anschlußkonsole (9) mindestens ein Durchbruch (10) ausgespart ist, der aus zwei unterschiedlich großen Teilbereichen (13, 14) besteht.

2. Kraftfahrzeuglenksäulenbaueinheit nach Anspruch 1,
**dadurch gekennzeichnet, daß**
ein Teilbereich (13) des Durchbruches (10) einen runden Querschnitt aufweist, dessen Durchmesser größer ist als der Außendurchmesser der Befestigungselemente (4, 7) und daß der weitere zweite Teilbereich (14) in Gestalt eines U-förmigen Querschnittes an den ersten Teilbereich angrenzt, wobei die Abmessung zwischen den beiden parallelen Schenkeln des zweiten Teilbereiches (14) kleiner ist als der Außendurchmesser der Befestigungselemente (4, 7).

3. Kraftfahrzeuglenksäulenbaueinheit nach Anspruch 1 oder 2,
**dadurch gekennzeichnet, daß**
die Distanzhülse aus Kunststoff hergestellt ist.
